(19)

Europäisches
Patentamt
European
Patent Office
Office européen
des brevets

(11) **EP 2 011 912 A1**

(12) **EUROPEAN PATENT APPLICATION**

(43) Date of publication:
 **07.01.2009 Bulletin 2009/02**

(51) Int Cl.:
 ***D06F 37/20*** (2006.01)   ***D06F 37/22*** (2006.01)
 ***F16F 7/104*** (2006.01)

(21) Application number: **08004969.5**

(22) Date of filing: **17.03.2008**

(84) Designated Contracting States:
 **AT BE BG CH CY CZ DE DK EE ES FI FR GB GR HR HU IE IS IT LI LT LU LV MC MT NL NO PL PT RO SE SI SK TR**
 Designated Extension States:
 **AL BA MK RS**

(30) Priority: **29.05.2007 KR 20070052008
 31.08.2007 KR 20070088491**

(71) Applicant: **LG Electronics Inc.
 Seoul, 150-721 (KR)**

(72) Inventors:
 • **Kim, Jae Hyun
 Seoul 153-023 (KR)**
 • **Kim, Young Ho
 Seoul 153-023 (KR)**
 • **Kim, Na Eun
 Seoul 153-023 (KR)**
 • **Chang, Jae Won
 Seoul 153-023 (KR)**
 • **Kim, Dong Won
 Seoul 153-023 (KR)**

(74) Representative: **Vossius & Partner
 Siebertstraße 4
 81675 München (DE)**

(54) **Dynamic vibration absorber**

(57)     A dynamic vibration absorber (100) for a washing machine is provided. The dynamic vibration absorber (100) for a washing machine comprises: a mass body; at least one elastic body for supporting the mass body so that the mass body may vibrate; and a guider for limiting a motion of the mass body, wherein the dynamic vibration absorber is attached to the washing machine generating a vibration upon operating to reduce the vibration of the washing machine.

FIG. 1

EP 2 011 912 A1

**Description**

The present invention relates to a vibration absorber of a washing machine.

In general, a washing machine is an apparatus for removing a contaminant adhered to clothes, bedding, etc. (hereinafter, referred to as 'the laundry') using a chemical disintegration of water and a detergent and a physical operation such as a friction between water and the laundry.

Such a washing machine is divided into a pulsator type washing machine for forming vortex flow in washing water within a tub in a state where the tub stands and for washing the laundry using a friction between water and the laundry or between the laundry caused by the vortex flow and a drum type washing machine for washing the laundry by lifting the laundry within a drum using a lifter formed within the drum and by using a physical impulsive force generating when the laundry is again dropped in the drum.

In order to more quickly dry the washed laundry, a process of dehydrating the laundry is performed, and the washing machine generally has a dehydration function.

The washing machine performs a washing process using the rotary power as a drive force and in the washing process, due to non-uniform disposition of the laundry within the tub, structural characteristics of the washing machine, or non-uniform disposition of elements for transmitting the rotary power, many vibrations are generated. Because such a vibration enables the washing machine to generate noise and becomes a cause of a fatigue damage, vibration reduction has an important influence on improving a quality of the washing machine and competitive power of a product. However, up to now, a satisfactory solution for these problems has not been proposed.

The present invention has been made in an effort to reduce the vibration of a washing machine, and the present invention provides a dynamic vibration absorber and a washing machine to which vibration absorber is attached. According to an aspect of the present invention, there is provided a dynamic vibration absorber for a washing machine including: a mass body; at least one elastic body for supporting the mass body so that the mass body may vibrate; and a guider for limiting a motion of the mass body, wherein the dynamic vibration absorber is attached to the washing machine generating a vibration, upon operating to reduce the vibration of the washing machine.

The guider may limit a motion of the mass body so that the mass body vibrates in only one direction.

One direction in which the mass body vibrates may be a direction parallel to a direction in which gravity operates.

An inertial force of the mass body generating when the mass body vibrates may operate as a compressive force to at least one of at least two elastic bodies and may operate as a tensile force to at least the other one of at least two elastic bodies.

The at least one of the elastic bodies may support a first end part in a vibration direction of the mass body, and the at least the other one of the elastic bodies may support a second end part in a vibration direction of the mass body.

The elastic body may support one of both end parts in a vibration direction of the mass body so that an inertial force of the mass body generating when the mass body vibrates operates as a compressive force or a tensile force to the elastic body according to a vibration direction.

The guider may include a housing for limiting a motion of the mass body so that the mass body vibrates in only one direction and for disposing the mass body in the housing.

The housing may include a rail for guiding the mass body so that the mass body vibrates in only one direction.

The dynamic vibration absorber for the washing machine may further include an amplitude limitation unit for limiting amplitude of the mass body to a predetermined range.

The guider may include a housing for limiting a motion of the mass body so that the mass body may vibrate in only one direction and for disposing the mass body therein, and the amplitude limitation unit may be provided in the housing.

The amplitude limitation unit may be an end part of the housing for partitioning a closed space of the housing.

The amplitude limitation unit may be disposed within the housing.

The amplitude limitation unit may be provided in the mass body.

The guider may include a shaft extended to penetrate the mass body and for limiting a motion of the mass body so that the mass body vibrates in only a direction to which the guider is extended.

The shaft may include an amplitude limitation unit for limiting amplitude of the mass body to a predetermined range.

The washing machine may include a leg for supporting the washing machine on a floor surface, and the dynamic vibration absorber may be attached to the leg.

The washing machine may further include a pedestal, and the dynamic vibration absorber may be attached to the pedestal.

According to another aspect of the present invention, there is provided a washing machine to which the dynamic vibration absorber for the washing machine is attached.

According to another aspect of the present invention, there is provided a dynamic vibration absorber for the washing machine including: a housing; a mass body disposed within the housing; and at least one elastic body for supporting the mass body so that the mass body may vibrate within the housing; wherein the dynamic vibration absorber is attached to the washing machine generating a vibration upon operating to reduce the vibration of the washing machine.

The dynamic vibration absorber for the washing machine may further include an amplitude limitation unit for limiting amplitude of the mass body to a predetermined range.

According to another aspect of the present invention, there is provided a washing machine to which the dynamic vibration absorber for the washing machine is attached.

The embodiment of the invention will be described in detail with reference to the following drawings in which like numerals refer to like elements.

FIG. 1 is a perspective view illustrating a washing machine to which a dynamic vibration absorber is attached according to a first-1 exemplary embodiment of the present invention;

FIG. 2 is a cross-sectional view of the washing machine taken along line II-II of FIG. 1;

FIG. 3 is a perspective view illustrating a dynamic vibration absorber according to a first exemplary embodiment of the present invention;

FIG. 4 is a perspective view illustrating a washing machine to which a dynamic vibration absorber is attached according to a first-2 exemplary embodiment of the present invention;

FIG. 5 is a graph illustrating that a vibration of a washing machine having a pedestal is reduced;

FIG. 6 is a perspective view illustrating a washing machine to which a dynamic vibration absorber is attached according to a first-3 exemplary embodiment of the present invention;

FIG. 7 is a perspective view illustrating a washing machine to which a dynamic vibration absorber is attached according to a first-4 exemplary embodiment of the present invention;

FIG. 8 is a perspective view illustrating a washing machine to which a dynamic vibration absorber is attached according to a first-5 exemplary embodiment of the present invention;

FIG. 9 is a perspective view illustrating a washing machine to which a dynamic vibration absorber is attached according to a first-6 exemplary embodiment of the present invention;

FIG. 10 is a perspective view illustrating a washing machine to which a dynamic vibration absorber is attached according to is a first-7 exemplary embodiment of the present invention;

FIG. 11 is a cross-sectional view illustrating a dynamic vibration absorber according to a second exemplary embodiment of the present invention;

FIG. 12 is a partial perspective view illustrating a dynamic vibration absorber according to a third exemplary embodiment of the present invention;

FIG. 13 is a plan view illustrating a dynamic vibration absorber according to a third exemplary embodiment of the present invention;

FIG. 14 is a cross-sectional view illustrating a dynamic vibration absorber according to a fourth exemplary embodiment of the present invention;

FIG. 15 is a cross-sectional view illustrating a dynamic vibration absorber according to a fifth exemplary embodiment of the present invention;

FIG. 16 is a cross-sectional view illustrating a dynamic vibration absorber according to a sixth exemplary embodiment of the present invention; and

FIG. 17 is a cross-sectional view illustrating a dynamic vibration absorber according to a seventh exemplary embodiment of the present invention.

Hereinafter, exemplary embodiments according to the present invention will be described in detail with reference to the accompanying drawings.

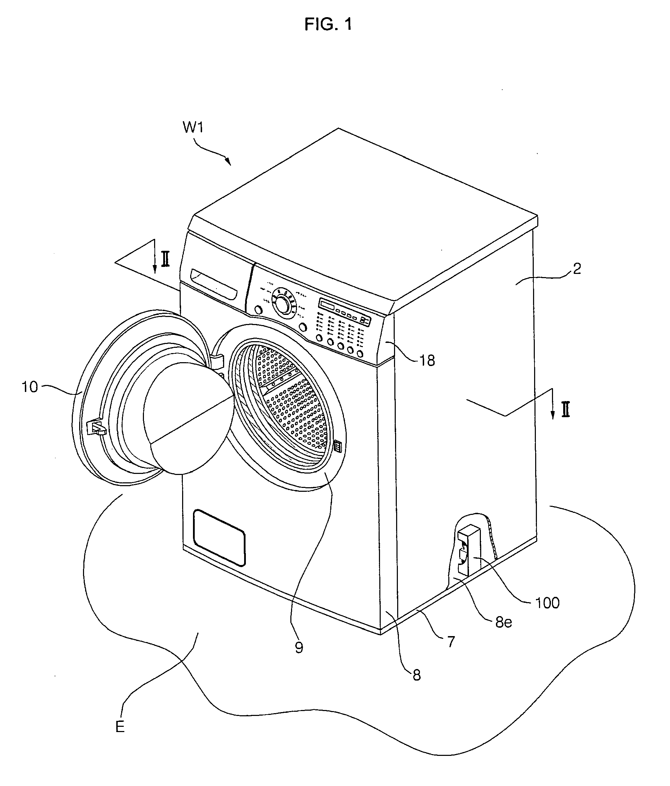

Referring to FIGS. 1 to 3, a dynamic vibration absorber 100 according to the first-1 exemplary embodiment of the present invention is described hereinafter.

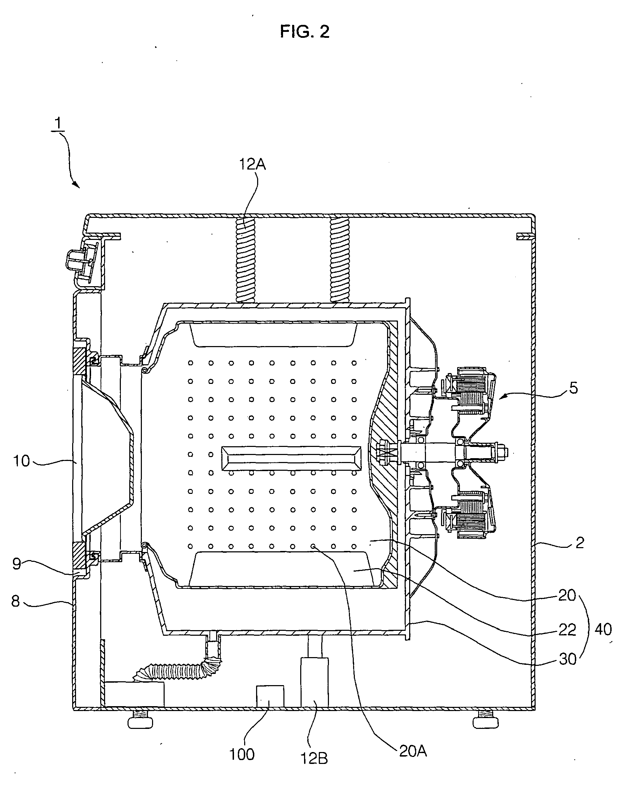

Referring to FIGS. 1 and 2, a washing machine W1 according to a first exemplary embodiment of the present invention is described hereinafter. FIGS. 1 and 2 shows that a dynamic vibration absorber according to the present invention is attached to a drum type washing machine, however a washing machine according to the present invention is not limited to the drum type washing machine. The dynamic vibration absorber according to the present invention can be applied to all washing machines for generating a vibration while operating as well as a pulsator type washing machine for washing the laundry with a vortex generated within a tub. Therefore, the dynamic vibration absorber according to the present invention is not only limited to the drum type washing machine but also include all type washing machine generating vibration on operating.

The washing machine W1 includes a cabinet 2 for forming an external appearance of a washing machine 1, a washing tub 40 provided within the cabinet 2 and for storing washing water and providing a space for washing the laundry, a driving source 5 mounted in the rear side of the washing tub 40 and for transmitting a driving force to the washing tub 40, a cabinet cover 8 mounted in the front of the cabinet 2, having a door part 9 in the center, and for forming the cabinet, a door 10 rotatably provided in the cabinet cover 8 so as to open and close the door part 9 of the cabinet cover 8, and a dynamic vibration absorber 100 attached to a floor surface 8e of the cabinet 2.

The dynamic vibration absorber 100 is attached to the floor surface 8e of the cabinet 2, however the dynamic vibration absorber 100 may be provided in any position of the washing machine in which a vibration can be transmitted. This is described in detail in exemplary embodiments. Further, in the drawings, one dynamic vibration absorber is disposed, however the quantity of the dynamic vibration absorber is not limited to one and may be provided in plural so as to reduce a vibration.

In FIG. 1, the dynamic vibration absorber 100 is attached within the cabinet 2, however the dynamic vibration absorber 100 may be provided in any place where a vibration of the washing machine can be transmitted, and a position of the dynamic vibration absorber 100 is not limited to the inside of the cabinet, and if a vibration is transmitted, it is not necessary that the dynamic vibration absorber 100 directly contacts with the cabinet. And, according to the present invention, because the dynamic vibration absorber according to the present invention is formed in a module and attached to the washing machine W1, although the dynamic vibration absorber is attached to the outside of the washing machine, the dynamic vibration absorber has less possibility of a failure and damage and provides a fine view. Elements and a function of the dynamic vibration absorber 100 are described later.

The washing tub 40 includes a tub 30 provided within the cabinet 2 to be buffered by a spring 12A and a damper 12B and for storing washing water, a drum 20 provided within the tub 30 so as to rotate by the driving source 5 and for housing the laundry and in which a plurality of holes 20A for passing washing water is formed, and a lifter 22 provided within the drum 20 so as to fall the laundry by gravity after lifting the laundry by a predetermined height when the drum 20 rotates.

Because the washing tub 40 is used only in a drum type of washing machine, the washing tub 40 includes a drum and a tub, however in other type washing machines, for example, a pulsator type washing machine, because the washing tub 40 includes a water tank for storing washing water and a pulsator for generating a vortex within the water tank, the washing tub according to the present invention is not limited thereto. Further, it is not always necessary that the door part 9 is provided on the front and may be provided on an upper surface, i.e. a position of the door is not limited to the above-described position.

A reason why a vibration generates when the washing machine operates is described.

One end of the drum 20 within the washing tub 40 should be directly or indirectly connected to the driving source 5 so as to receive the rotary power transmitted from the driving source 5. However, because the other end thereof is connected to the spring 12A and the damper 12B, the other end of the drum 20 is hanged in a gravity direction by gravity. Because the hanging means that a center of mass of the drum 20 is distant from a rotation axis of the drum 20, when the drum 20 rotates, a vibration is generated due to non-uniform mass distribution. Even if the washing machine is not a drum type washing machine, due to non-uniformity of the laundry disposed within a washing tub or non-uniformity of an inner element, a considerable vibration may generate when the washing machine operates. Such a vibration can be further augmented in a process of rotating the drum in a high speed so as to dehydrate the laundry and thus in particularly a dehydration process while operating the washing machine, a vibration is evaluated as an important problem.

The drum type washing machine W1 has a large vibration generation possibility due to structural characteristics, however a vibration problem is not limited to the drum type washing machine. In order to avoid repetition of description, the washing machine is limited to the drum type washing machine W1, and a function of a vibration reduction means according to the present invention will be described. However, it will be understood by those skilled in the art that the dynamic vibration absorber according to the present invention can be used in other all washing machines causing vibration on operating.

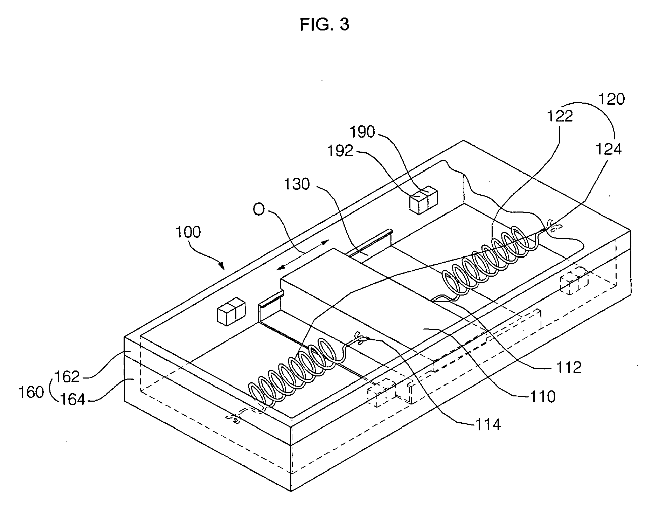

Referring to FIG. 3, a dynamic vibration absorber 100 (hereinafter, a dynamic vibration absorber for a washing machine is referred to as a dynamic vibration absorber) attached to the washing machine W1 according to a first-1 exemplary embodiment of the present invention is described hereinafter.

The dynamic vibration absorber 100 includes a mass body 110 having a predetermined mass, at least one elastic body 120 for supporting the mass body 110, and a guider for limiting a motion of the mass body 110.

In this exemplary embodiment, the elastic body 120 includes a first elastic body 122 and a second elastic body 124. The elastic body 120 can be disposed so that an inertial force of the mass body 110 is operated as a tensile force to the second elastic body 124, when an inertial force of the mass body 110 generating when the mass body 110 vibrates is operated as a compressive force to the first elastic body 122. In FIG. 1, the first elastic body 122 supports a first end part 112 of the mass body and the second elastic body 124 supports a second end part 114 of the mass body, however this is an illustration and a range of the present invention is not limited to a disposition of the elastic body shown in FIG. 1. The elastic body 120 may be a coil spring of FIG. 3, however the elastic body 120 is not limited thereto. If the elastic body 120 has a restoring force by elasticity so as to cause a vibration motion of the mass body, the elastic body 120 can use other kinds of springs such as a tension spring and a flat spring as well as a coil spring, and can use any material having elasticity.

The dynamic vibration absorber 100 includes a housing 160 for housing the mass body 110 and the elastic body 120 and a guider disposed within the housing 160 and for limiting a motion of the mass body 110, i.e. a vibration direction (o). In this exemplary embodiment, a rail 110 performs a function of the guider. However, the guider is not limited to the rail 110 and even if the rail 110 does not exist, the housing 160 may perform a function of the guider while positioning the mass body 110 therein.

The housing 160 is divided into a front housing 182 and a rear housing 184, and the housing 160 prevents from entering a foreign substance therein, thereby enabling a vibration of the mass body or preventing the elastic body 120 from being rusted by being exposed to water. Further, as the housing 160 enables the dynamic vibration absorber 100 to be formed in a module, the dynamic vibration absorber 100 can be effectively attached to the washing machine, and the dynamic vibration absorber 100 can be used in various washing machines and thus an application range of the dynamic vibration absorber 100 is extended.

The dynamic vibration absorber 100 includes an amplitude limitation unit 190 for limiting amplitude of the mass body 110 when the mass body 110 vibrates. When amplitude of the mass body 110 increases by resonating with a vibration of the washing machine, the amplitude limitation unit 190 performs a function of limiting a range of the amplitude to a range that can reduce a vibration of the washing machine. The amplitude limitation unit 190 may include a sound-absorbing material 192 attached to an end part in which the mass body 110 vibrates. As amplitude of the mass body 110 increases, if the mass body 110 collides with the amplitude limitation unit 190, a crashing sound is generated, and the sound-absorbing material 192 performs a function of absorbing the crashing sound.

A reason why the dynamic vibration absorber 100 according to the first exemplary embodiment of the present invention can effectively reduce a vibration of the washing machine is described hereinafter together with a vibration characteristic of the washing machine.

As described above, a considerable vibration is generated in the washing machine W1. Therefore, a means for reducing a vibration is required. As such a means, the spring 12A and the damper 12B support the washing tub 40, as shown in FIG. 2, however there is a limitation in reducing a vibration with only such a means and due to a vibration characteristic of the washing machine, a vibration may be sometimes increased. Therefore, in order to obtain enough level of vibration reduction, a separate vibration reduction means is considered.

According to a physical theory, a natural frequency of the washing machine is in proportional to

$$\sqrt{\frac{k}{m}}\,,$$ where m is a mass of a vibration body and k is an elastic modulus. If an object having a natural frequency identical to that of the washing machine is attached to the washing machine to generate a resonance, a vibration of the washing machine is reduced. This is a physical law as a theoretical background of a dynamic vibration absorber and is known to those skilled in the art. Therefore, by using such a physical law as a theoretical background, the dynamic vibration absorber for reducing a vibration of the washing machine is designed.

However, a dynamic vibration absorber that can immediately apply to a product while reducing a vibration generating when actually operating the washing machine to an enough level cannot be immediately designed with only such a physical background.

In general, by deriving an elastic modulus according to a vibration characteristic of the washing machine through an experiment, a natural frequency of the washing machine can be seen, and by attaching an elastic body having a frequency identical to the natural frequency to the washing machine, some degree of vibration reduction can be obtained according to a basic theory of the dynamic vibration absorber. However, in order to actually apply such a dynamic vibration absorber to a product, a close research about a vibration characteristic of the washing machine is required, and a dynamic vibration absorber that can absorb a vibration and satisfy all factors such as harmony, productivity, and cost with other elements of the washing machine is required. This is because a vibration generating in the washing machine is an important problem, however although a vibration is reduced, if additional expense is generated or existing work efficiency is deteriorated, it is difficult to select such a means and a negative influence is exerted on quality competitive power of the washing machine. Therefore, it is required to minutely consider a vibration characteristic of the washing machine and to design an optimized dynamic vibration absorber for minimizing additional burden while reducing a vibration according to the vibration characteristic.

Under such a theoretical background, a vibration characteristic of a washing machine studied to develop the optimized dynamic vibration absorber is described as follows.

First, when the drum 20 rotates in a high speed, a vibration of the washing machine becomes a large problem. That is, because energy of a vibrating object is proportional to square of a frequency and amplitude, when rotating in a high speed, vibration energy increases, and thus problems related to a vibration increase. However, when a driving source supplies the rotary power of a high speed to the washing machine, the washing machine generally performs a dehydration process. The rotary power may change according to a specification and a driving situation of the washing machine, however because a driving source provides the rotary power having the number of rotation about 900-1100rpm in a dehydration processes, it is preferable that the dynamic vibration absorber is designed to reduce a vibration generating when rotating in such a high speed.

Because the washing machine is used with fixed to a floor surface E, a vibration generating in the washing machine is transmitted to the floor surface E. Therefore, a vibration of the washing machine should be considered together with a process in which the vibration is transmitted to the floor surface E.

A vibration generating when the washing machine operates is generally not limited to one direction. A three-dimensional vibration motion without limitation of a vertical direction, a front and rear direction, and a lateral direction is performed based on the floor surface E supporting the washing machine. However, if the rotary power of a high speed is transmitted from a driving source as the washing machine performs an operation such as a dehydration process, a frequency of the washing machine approaches a natural frequency of the floor surface E, thereby causing a resonance. Such a resonance is frequently generated in particularly a dehydration process in which a driving source rotates in a high speed. However, because a vibration motion is limited in a front and rear direction and a lateral direction while the floor surface E vibrates, amplitude of the vibration is not larger, and because a structure for limiting a vibration motion of the floor surface E does not exist in a vertical direction of vibration, a main vibration motion of the floor surface E is a vertical direction of vibration motion. Therefore, as in a dehydration process of the washing machine, when vibrating in a high frequency range, due to a vibration with the floor surface E, a main vibration motion of the washing machine converges to a vertical direction of vibration motion. Therefore, in order to reduce a vibration in a dehydration process, which is a main problem in a vibration, a means for reducing a vibration is required in consideration of a vibration characteristic of such a vertical direction.

Under such a theoretical background, the dynamic vibration absorber 100 according to the present invention can be attached to the floor surface 8e of the washing machine W1 so that the mass body 110 of the dynamic vibration absorber 100 vibrates along a vertical direction, i.e. a direction in which gravity operates in order to reduce a vibration generating in a process of resonating in a vertical direction as the washing machine W1 generates a resonance with the floor surface E. When the disposed dynamic vibration absorber 100 resonates with the floor surface as the washing machine operates, a generating vibration is effectively reduced.

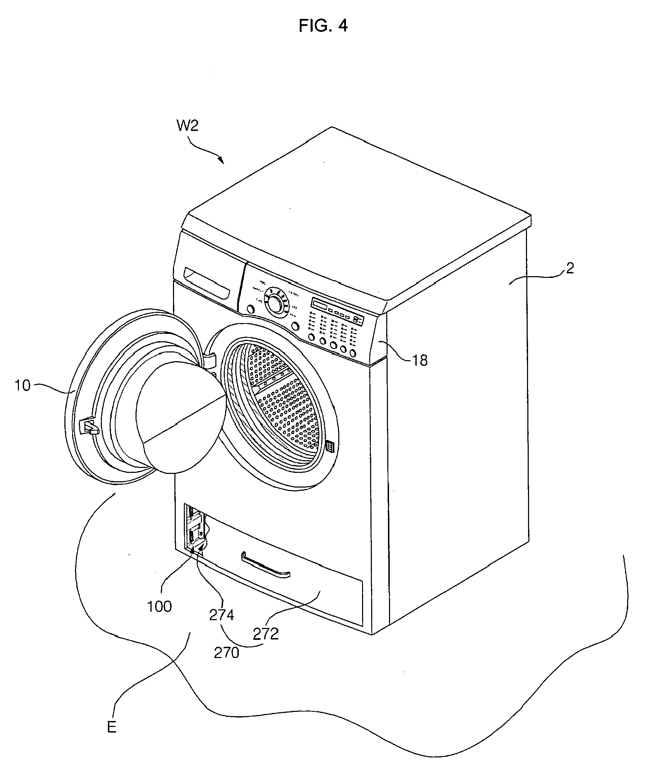

Referring to FIG. 4, a washing machine W2 according to a first-2 exemplary embodiment of the present invention is described hereinafter.

The washing machine W2 according to this exemplary embodiment is different from the first exemplary embodiment of the present invention, in that a position in which a dynamic vibration absorber is attached to the washing machine and a pedestal 270 is added to the washing machine. A configuration and operation of a dynamic vibration absorber attached to the washing machine W2 according to this exemplary embodiment are identical to those of the first exemplary embodiment of the present invention, and a configuration and operation of the washing machine W2 are identical to those of the first-1 exemplary embodiment and therefore a detailed description thereof is omitted.

The washing machine W2 includes the pedestal 270 in the lower part. The pedestal 270 can be used as a place for storing the laundry or a detergent and performs a function of reducing a vibration of the washing machine W2 according to a design. The pedestal 270 includes a reception space 274 and a drawer 272 for coming into or coming out the reception space 274. The dynamic vibration absorber 100 is disposed within the reception space 274 of the pedestal 270 and attached to the floor surface. Due to such a disposition, the dynamic vibration absorber 100 can effectively reduce a vibration generating in the washing machine W2 and provide a fine view.

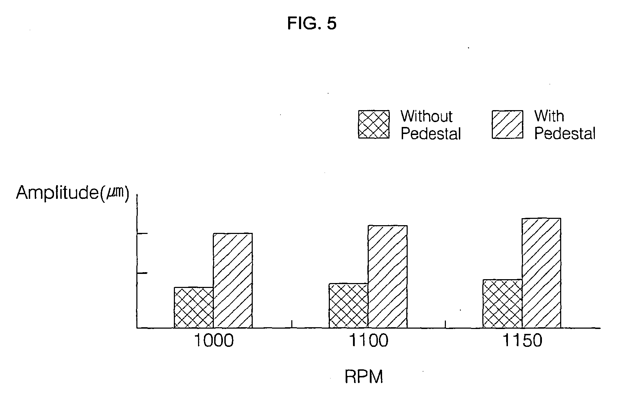

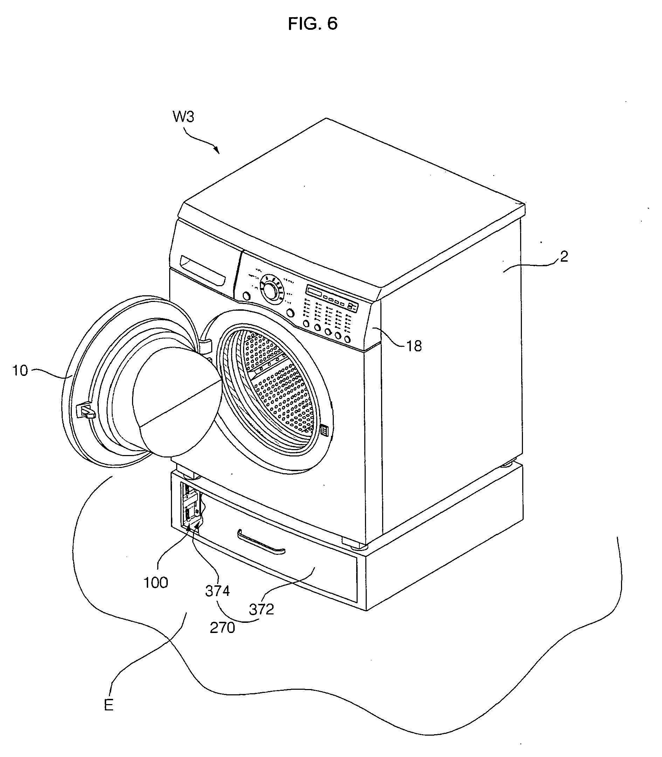

Referring to FIGS. 5 and 6, a washing machine W3 according to a first-3 exemplary embodiment of the present invention is described hereinafter.

The washing machine W3 according to this exemplary embodiment is different from the washing machine W1 according to the first-1 exemplary embodiment of the present invention, in that a position in which a dynamic vibration absorber is attached to the washing machine W3, and the washing machine W3 includes a pedestal 80 separated from a cabinet forming a external shape and for forming a reception space, and the pedestal 80 supports the cabinet. A configuration and operation of the dynamic vibration absorber attached to the washing machine W3 according to this exemplary embodiment are identical to those of the washing machine W1 according to the first-1 exemplary embodiment of the present invention, and a configuration and operation of the washing machine W3 are identical to those of the washing machine W1 and therefore a detailed description thereof is omitted.

As in this exemplary embodiment, when a main body of the washing machine W3 is provided on a pedestal 370 in which a drawer 372 is disposed within a reception space 374, a vibration when the pedestal 370 exists has amplitude greater than that when the pedestal 370 does not exist, as shown in FIG. 5. Therefore, when the pedestal is provided, the necessity for reducing a vibration greatly increases.

However, in this exemplary embodiment, the dynamic vibration absorber 100 is disposed within the reception space 374 of the pedestal 370 to absorb a vibration of the washing machine W3, thereby reducing a vibration of the washing machine. In this case, it is preferable that the dynamic vibration absorber 100 is attached to the floor surface E of the pedestal 370, however it is not always necessary that the dynamic vibration absorber 100 is attached to the floor surface E.

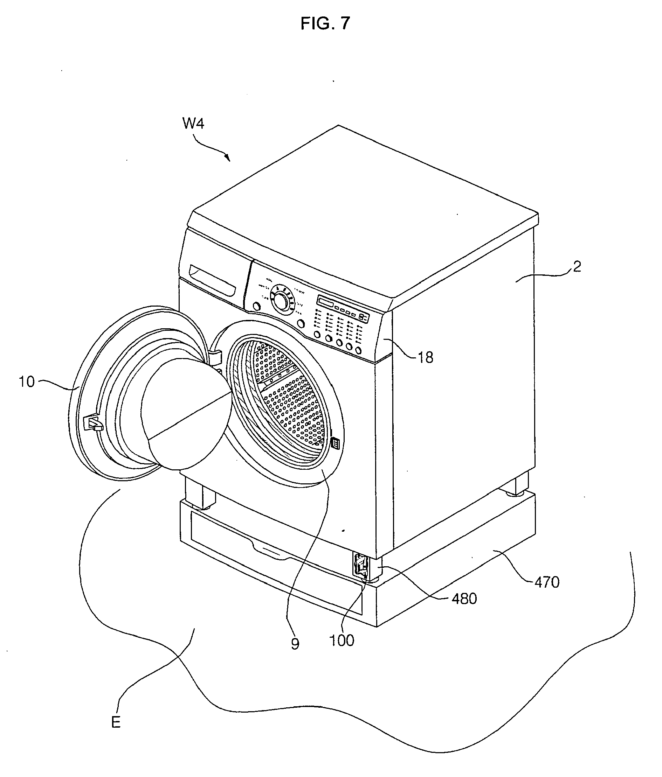

Referring to FIG. 7, a washing machine W4 according to a first-4 exemplary embodiment of the present invention is described hereinafter.

The washing machine W4 according to this exemplary embodiment is different from the washing machine W3 according to the first-3 exemplary embodiment of the present invention, in that a position in which a dynamic vibration absorber is attached to the washing machine W4. A configuration and operation of a dynamic vibration absorber attached to the washing machine W4 according to this exemplary embodiment are identical to those of the washing machine W3 according to the first-3 exemplary embodiment of the present invention, and a configuration and operation of the washing machine W4 are identical to those of the washing machine W3 and therefore a detailed description thereof is omitted.

As in the washing machine W3 according to the first-3 exemplary embodiment, the washing machine W4 according to this exemplary embodiment includes a pedestal 470. However, in the washing machine W4 according to this exemplary embodiment, the dynamic vibration absorber 100 is disposed in a leg 480 for supporting the cabinet 2 of the washing machine W4. If the washing machine W4 operates, a vibration of the washing machine W4 is transmitted to the pedestal 470 via the leg 480. Therefore, if the dynamic vibration absorber 100 is disposed in the leg 480, a vibration transmitted to the leg 480 is effectively reduced, thereby reducing a vibration of the washing machine W4.

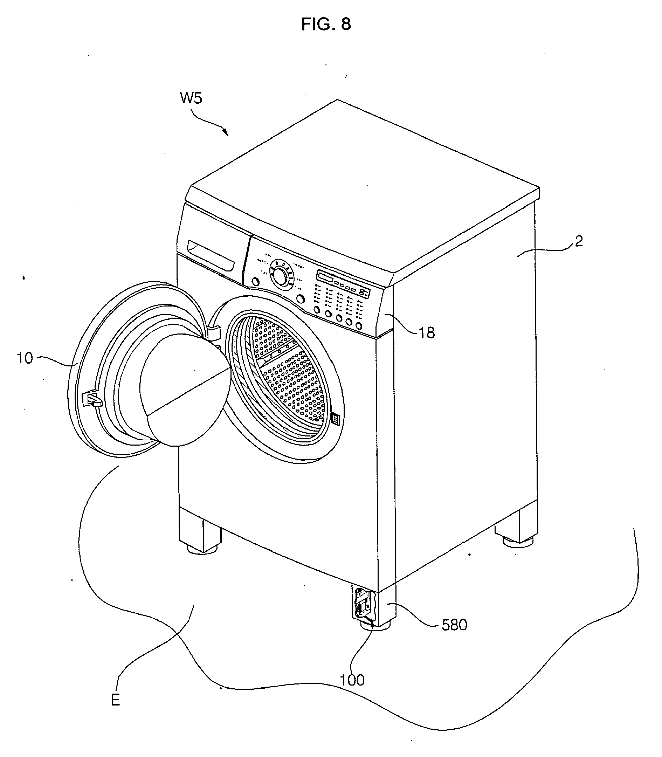

Referring to FIG. 8, a washing machine W5 according to a first-5 exemplary embodiment of the present invention is described hereinafter.

The washing machine W5 according to this exemplary embodiment is different from the washing machine W1 according to the first-1 exemplary embodiment of the present invention, in that the washing machine W5 includes a leg and a position in which a dynamic vibration absorber is attached to the washing machine is different. A configuration and operation of the dynamic vibration absorber attached to the washing machine W5 according to this exemplary embodiment are identical to those of the washing machine W1 according to the first-1 exemplary embodiment of the present invention, and a configuration and operation of the washing machine W5 are identical to those of the washing machine W1 and therefore a detailed description thereof is omitted.

The washing machine W5 of this exemplary embodiment includes a leg 580 for supporting the cabinet 2 on the floor surface E. The dynamic vibration absorber 100 is disposed in the leg 580. A vibration generating while operating the washing machine W5 is transmitted to the floor surface E via the leg 580 to resonate with the floor surface E. In this case, the dynamic vibration absorber 100 disposed in the leg 580 absorbs the vibration, thereby reducing a vibration of the washing machine.

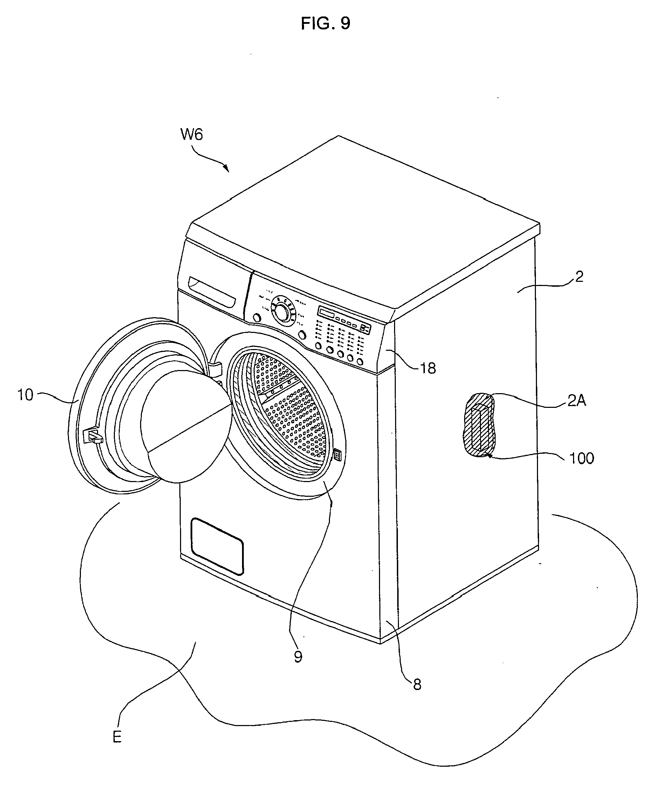

Referring to FIG. 9, a washing machine W6 according to a first-6 exemplary embodiment of the present invention is described hereinafter.

The washing machine W6 according to this exemplary embodiment is different from the washing machine W1 according to the first-1 exemplary embodiment of the present invention, in that a position in which a dynamic vibration absorber is attached to the washing machine is different. A configuration and operation of the dynamic vibration absorber attached to the washing machine W6 according to this exemplary embodiment are identical to those of the washing machine W1 according to the first-1 exemplary embodiment of the present invention, and a configuration and operation of the washing machine W6 are identical to those of the washing machine W1 and therefore a detailed description thereof is omitted.

In this exemplary embodiment, the dynamic vibration absorber 100 is attached to a side surface 2A, not a floor surface within the cabinet. A vibration generating in the washing machine W6 resonates with the floor surface E, however because the vibration moves to an entire washing machine, although the dynamic vibration absorber is attached to a position, not a floor surface, a vibration reduction effect is not greatly reduced. Therefore, as in this exemplary embodiment, the dynamic vibration absorber 100 can be attached to the side surface 2A.

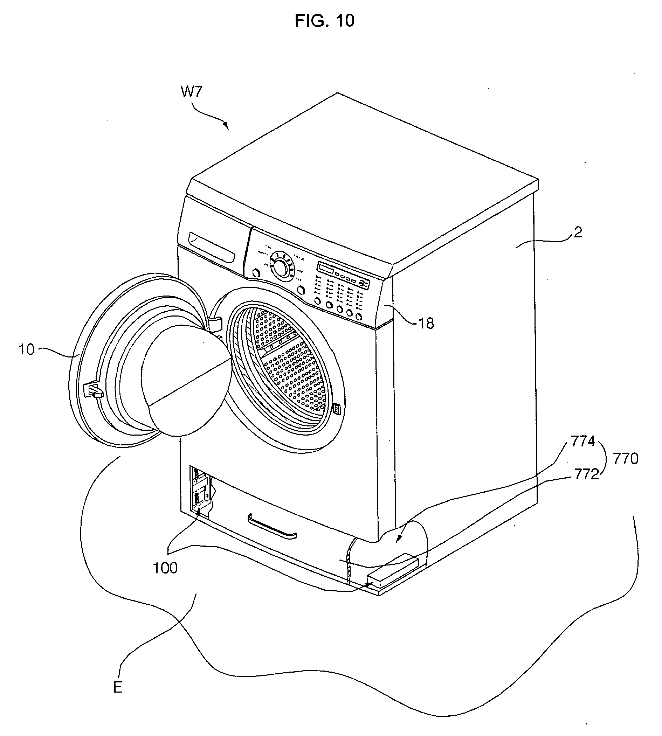

Referring to FIG. 10, a washing machine W7 according to a first-7 exemplary embodiment of the present invention is described hereinafter.

The washing machine W7 according to this exemplary embodiment is different from the washing machine W2 according to the first-2 exemplary embodiment of the present invention, in that a plurality of dynamic vibration absorbers is attached to the washing machine and a position in which the plurality of dynamic vibration absorbers is attached to the washing machine is different. A configuration and operation of the dynamic vibration absorber attached to the washing machine W7 according to this exemplary embodiment are identical to those of the washing machine W2 according to the first-2 exemplary embodiment of the present invention, and a configuration and operation of the washing machine W7 are. identical to those of the washing machine W1 and therefore a detailed description thereof is omitted.

The washing machine W7 according to this exemplary embodiment has the same basic configuration as that of the washing machine W2 according to the first-2 exemplary embodiment. A plurality of dynamic vibration absorbers is attached to the washing machine W7 of this exemplary embodiment. A vibration direction of the mass body 110 of at least one of the attached dynamic vibration absorbers may be a direction perpendicular to the gravity direction, not a gravity direction. As described above, it is preferable that the mass body vibrates along a gravity direction in order to reduce a vibration generating in a dehydration process. However, when the number of rotation of the driving source 5 provided in the washing machine is relatively small, because the vibration resonates with the floor surface, a vibration direction does not converge in a vertical direction. Therefore, in order to reduce a vibration of a direction except a vibration direction, the dynamic vibration absorber 100 can be attached to the washing machine so that the mass body 110 of the dynamic vibration absorber may vibrate in a direction perpendicular to the gravity direction. A disposition of the dynamic vibration absorber can simultaneously reduce a vibration of a gravity direction and a vibration of a direction perpendicular to the gravity direction. A disposition of the dynamic vibration absorber described above is not limited to the washing machine W2 according to the first-2 exemplary embodiment and can be applied to all washing machines described above.

In FIG. 10, two dynamic vibration absorbers 100 are disposed in a reception space 774 of a pedestal 770, however the quantity of the dynamic vibration absorber 100 is not limited to two and many dynamic vibration absorbers 100 may be disposed. Further, a position of the dynamic vibration absorber 100 is not limited to the reception space of the pedestal.

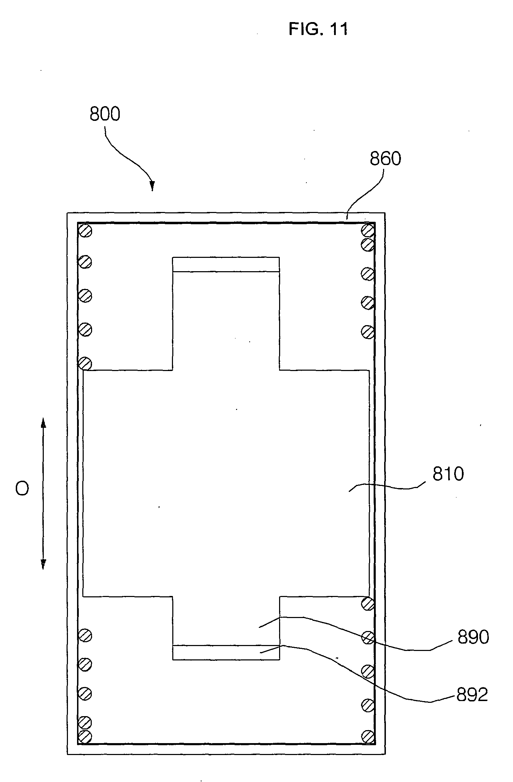

Referring to FIG. 11, a dynamic vibration absorber 800 according to the second exemplary embodiment that can be attached to the washing machine is described hereinafter.

The dynamic vibration absorber 800 according to this exemplary embodiment is different from the dynamic vibration absorber 100, in that an amplitude limitation unit 890 is provided in a mass body 810. The dynamic vibration absorber 800 according to this exemplary embodiment is identical to the dynamic vibration absorber 100, in a basic configuration and operation of the attached dynamic vibration absorber and an attached position of the dynamic vibration absorber, and a configuration and operation of the washing machine to which the dynamic vibration absorber 800 is attached are identical to those of the washing machine to which the dynamic vibration absorber 100 is attached and therefore a detailed description thereof is omitted.

The mass body 810 included in the dynamic vibration absorber 800 of this exemplary embodiment includes an amplitude limitation unit 890 for limiting amplitude of a vibration when the mass body 890 vibrates. The amplitude limitation unit 890 may be separately attached to the mass body 810, or may have a protrusion shape in which the amplitude limitation unit 890 and the mass body 810 are formed together. When the mass body 810 is formed, if the amplitude limitation unit 890 is formed, a process of providing the amplitude limitation unit 890 within the housing is reduced, whereby a cost is reduced and work efficiency is improved. A sound-absorbing material 892 for reducing noise that may generate as the amplitude limitation unit 890 collides with an inside surface of the housing 860 when the mass body 810 vibrates can be attached to an end part of the amplitude limitation unit 890.

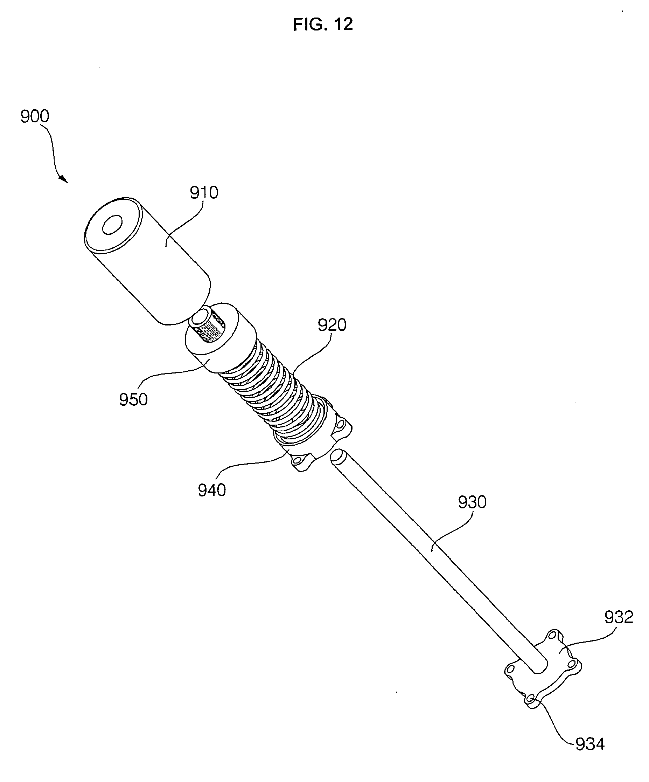

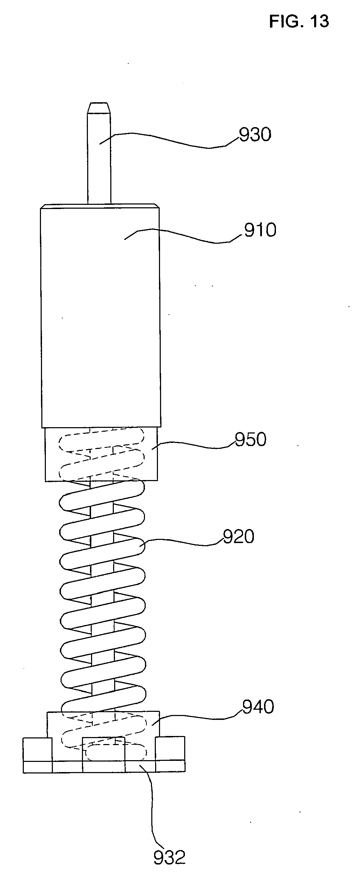

Referring to FIGS. 12 and 13, a dynamic vibration absorber 900 according to a third exemplary embodiment that can be attached to the above-described respective washing machine is described hereinafter.

A configuration of the dynamic vibration absorber 900 according to this exemplary embodiment is different from that of the dynamic vibration absorber 100, however the dynamic vibration absorber 900 according to this exemplary embodiment is identical to the dynamic vibration absorber 100, in a function and an attached position of the dynamic vibration absorber 900, and a configuration and an operation of the washing machine to which the dynamic vibration absorber 900 is attached are identical to those of the washing machine to which the dynamic vibration absorber 100 is attached and therefore a detailed description thereof is omitted.

The dynamic vibration absorber 900 includes a mass body 910 having a predetermined mass, an elastic body 920 for supporting the mass body 910 so that the mass body 910 may vibrate, and a guider 930 for limiting a motion of the mass body 910 so that the mass body 910 may vibrate in only one direction. It is not necessary that the guider limits a vibration motion of the mass body 900 to only one direction, however it is preferable to optimize vibration characteristics that the guider limits a vibration motion of the mass body 900 to only one direction. It is preferable that the above one direction is a direction in which gravity operates. As shown in FIG. 3, the elastic body 920 may be a coil spring, however the elastic body 920 is not limited thereto and may use other kinds of springs such as a tension spring and a flat spring like an elastic body used in the dynamic vibration absorber 900 according to the first exemplary embodiment, or may use any material having elasticity although not a spring.

The guider according to the present invention may be used as a rail, a cylinder, or a slot. The guider 930 included in the dynamic vibration absorber 900 is extended through the mass body 910 and may have a shaft form for limiting a motion of the mass body 910 so that the mass body 910 vibrates in only a direction to which the guider 930 is extended.

The guider 930 includes a coupling unit 932 for attaching the dynamic vibration absorber 900 to the washing machine, and a shaft extended to penetrate the elastic body 920 and the mass body 910 from the coupling unit 932 and for limiting a motion of the mass body 910 so that the mass body 910 may vibrate in only the extended direction. The mass body 910 performs a reciprocating motion while sliding along the guider 930 due to the guider 930.

Because the shaft performs a function of the guider, reference numerals of the shaft and the guider are equally used.

In FIG. 3, the shaft 930 is formed integrally with the coupling unit 932 and is extended from the coupling unit 932, however the shaft 930 is not limited thereto. That is, the shaft 930 is formed integrally with the coupling unit 932 and is formed with a production method such as casting, however the shaft 930 and the coupling unit 932 may be formed in separate parts to couple to each other.

The dynamic vibration absorber 900 may further include a mass body coupling unit 950 coupled to the mass body 910, disposed between the elastic body 920 and the mass body 910 so that the mass body may vibrate, supported by the elastic body 920, and to which the shaft is penetrated. However, because the elastic body 920 may be welded directly to the mass body 910, the mass body coupling unit 950 is not always necessary.

Further, the dynamic vibration absorber 900 may further include an elastic body coupling unit 940 coupled to the coupling unit 932, disposed between the coupling unit 932 and the elastic body 920, supported by the elastic body 920, and to which the shaft is penetrated. However, because the elastic body 920 may be coupled directly to the coupling unit 932, the elastic body coupling unit 940 is not an essential element.

Because the dynamic vibration absorber 900 can fully perform a function of a dynamic vibration absorber, and because the dynamic vibration absorber is used as a single part as the mass body is coupled to a shaft, the dynamic vibration absorber 900 can be easily used as a module. Further, because the dynamic vibration absorber 900 can be easily attached to the washing machine through the coupling unit 932, work efficiency of attaching the dynamic vibration absorber 900 to the washing machine is improved.

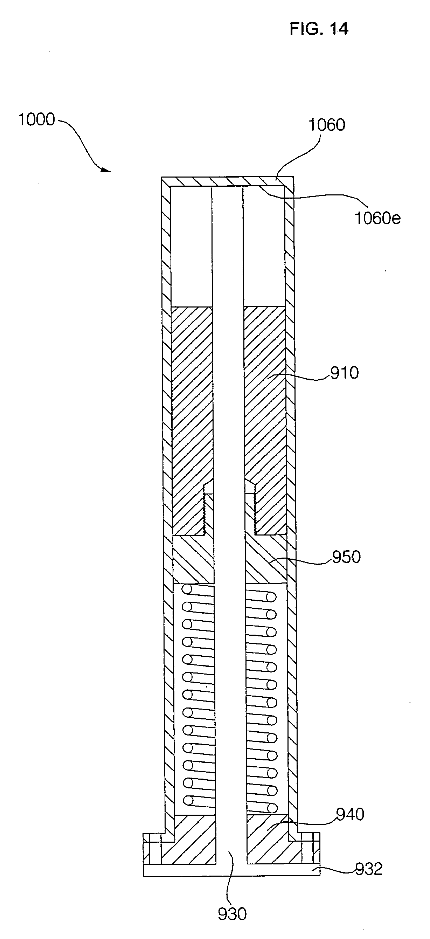

Referring to FIG. 14, a dynamic vibration absorber 1000 according to a third exemplary embodiment of the present invention is described hereinafter.

A configuration of the dynamic vibration absorber 1000 according to this exemplary embodiment is different from that of the dynamic vibration absorber 900 according to the second exemplary embodiment, in that a housing is added, and the configuration and function of the dynamic vibration absorber 1000 according to this exemplary embodiment are identical to those of the dynamic vibration absorber 900, and a position in which the dynamic vibration absorber 1000 is attached to the washing machine is identical to that in which the dynamic vibration absorber 900 is attached to the washing machine and therefore a detailed description thereof is omitted.

The dynamic vibration absorber 1000 further includes a shaft 930 for performing a function of the guider and a housing 1060 for inducing a vibration direction of the mass body 910 and for disposing the mass body 910 therein. The housing 1060 performs a function of protecting an elastic body and a mass body, etc. provided in the dynamic vibration absorber 1000 while performing a function of a guider for limiting a motion of the mass body, as in the shaft 930, and facilitates to provide the dynamic vibration absorber 1000 through modularization. In FIG. 14, the housing has the same shape as that of a cylinder housing, however the shape of the housing is not limited thereto, and the shape may be formed according to various design conditions. In the dynamic vibration absorber in which the housing 1060 is provided, the shaft 130 is not always necessary because the housing 1060 may perform a function of a guider in which the shaft performs.

The housing 1060 performs a function of an amplitude limitation unit for preventing that amplitude of the mass body increases to a predetermined level or more when the mass body performs a vibration motion. That is, by limiting a length of the housing to a predetermined range, an end part 1060e of the housing for partitioning a closed space of the housing 1060 can perform a function of preventing that the mass body vibrates to amplitude of a predetermined level or more. A sound-absorbing material (not shown) provided within the end part 1060e of the housing can reduce noise generating when the mass body collides with an inside surface of the end part 1060e of the housing.

Referring to FIG. 15, a dynamic vibration absorber 1100 according to a fourth exemplary embodiment of the present invention is described hereinafter.

A configuration of the dynamic vibration absorber 1100 according to this exemplary embodiment is identical to that of the dynamic vibration absorber 1000 according to the third exemplary embodiment, except that an amplitude limitation unit is added, the configuration and function of the dynamic vibration absorber 1100 are identical to those of the dynamic vibration absorber 1000, and a position in which the dynamic vibration absorber 1100 is attached to the washing machine is identical to that in which the dynamic vibration absorber 1000 is attached to the washing machine and therefore a detailed description thereof is omitted.

An amplitude limitation unit 1190 for limiting amplitude according to a vibration of the mass body to a predetermined range is provided within the housing 1160 in which the dynamic vibration absorber 1100 is provided. A sound-absorbing material 1192 for reducing noise generating by colliding with the amplitude limitation unit 1190 when the mass body 910 vibrates is provided in the amplitude limitation unit 1190.

Referring to FIG. 16, a dynamic vibration absorber 1200 according to a fifth exemplary embodiment of the present invention is described hereinafter.

A configuration of the dynamic vibration absorber 1200 according to this exemplary embodiment is identical to that of a dynamic vibration absorber 1000 according to the third exemplary embodiment, except that an amplitude limitation unit is added, and the configuration and function of the dynamic vibration absorber 1200 are identical to those of the dynamic vibration absorber 1000, and a position in which the dynamic vibration absorber 1100 is attached to the washing machine is identical to that in which the dynamic vibration absorber 1000 is attached to the washing machine and therefore a detailed description thereof is omitted.

A mass body 1210 included in the dynamic vibration absorber 1200 includes an amplitude limitation unit 1290 for limiting amplitude of the mass body 1210 when the mass body 1210 vibrates. The amplitude limitation unit 1290 may be separately attached to the mass body 1210, or may be formed together with the mass body 1210 as a part of the mass body 1210 when the mass body 1210 is formed.

Referring to FIG. 17, a dynamic vibration absorber 1300 according to a sixth exemplary embodiment of the present invention is described hereinafter.

A configuration of the dynamic vibration absorber 1200 according to this exemplary embodiment is identical to that of the dynamic vibration absorber 1000 according to the third exemplary embodiment, except that the amplitude limitation unit is added, and the configuration and function of the dynamic vibration absorber 1200 according to this exemplary embodiment are identical to those of the dynamic vibration absorber 1000, and a position in which the dynamic vibration absorber 1100 is attached to the washing machine is identical to that in which the dynamic vibration absorber 1000 is attached to the washing machine and therefore a detailed description thereof is omitted.

A shaft 1330 for performing a function of a guider and included in the dynamic vibration absorber 1300 includes an amplitude limitation unit 1390 for limiting amplitude of the mass body 910 to a predetermined level when the mass body 910 performs a vibration motion. A sound-absorbing material 1392, for reducing noise that may generate due to a collision of the mass body and the amplitude limitation unit when the mass body 910 performs a vibration motion, may be disposed in the amplitude limitation unit 1390.

The embodiment of the invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. A dynamic vibration absorber for a washing machine, the dynamic vibration absorber comprising:

   a mass;
   at least one elastic body which supports the mass such that the mass is configured to vibrate; and
   a guide configured to limit a motion of the mass,

   wherein the dynamic vibration absorber is configured to be connected to the washing machine such that vibration of the washing machine is reduced during operation.

2. The dynamic vibration absorber according to claim 1, wherein the guide limits the motion of the mass such that the mass vibrates in a translational direction.

3. The dynamic vibration absorber according to claim 2, wherein the translational direction is parallel to a major direction of gravitational pull.

4. The dynamic vibration absorber according to any one of the preceding claims, wherein the at least one elastic body comprises first and second elastic bodies, wherein an inertial force of the mass is generated when the mass vibrates, and wherein the mass applies a compressive force to one of the first and second elastic bodies and applies a tensile force to the other of the first and second elastic bodies.

5. The dynamic vibration absorber according to claim 4, wherein one of the first and second elastic bodies supports a first end of the mass in the translational direction, and
   the other of the first and second elastic bodies supports a second end of the mass in the translational direction.

6. The dynamic vibration absorber according to any one of claims 1 to 3, wherein the elastic body supports one end of the mass in the translational direction such that an inertial force of the mass, generated when the mass vibrates, applies either one of a compressive force and a tensile force to the elastic body in response to a vibration direction of the mass.

7. The dynamic vibration absorber according to any one of the preceding claims, wherein the guide comprises a housing which limits the motion of the mass such that the mass is configured to vibrate in a translation direction, and wherein the mass is positioned within the housing.

8. The dynamic vibration absorber according to claim 7, wherein the housing comprises a rail configured to guide the mass.

9. The dynamic vibration absorber according to any one of the preceding claims, further comprising an amplitude limitation unit which limits an amplitude of the mass to a predetermined range.

10. The dynamic vibration absorber according to claim 9, wherein the guide comprises a housing which limits the motion of the mass such that the mass is configured to vibrate in the translational direction, and wherein both the mass and the amplitude limitation unit is provided within the housing.

11. The dynamic vibration absorber according to claim 10, wherein the amplitude limitation unit is provided on an end part of the housing and is configured to partition a closed space defined within the housing.

12. The dynamic vibration absorber according to claim 9 or 10, wherein the amplitude limitation unit is provided within the housing.

13. The dynamic vibration absorber according to any one of the preceding claims, wherein the amplitude limitation unit is provided on the mass body.

14. The dynamic vibration absorber according to claim 1, wherein the guide comprises a shaft extending through the mass, and wherein the shaft is configured to limit a motion of the mass such that the mass vibrates in a translational direction along the shaft.

15. The dynamic vibration absorber according to claim 14, wherein the shaft comprises an amplitude limitation unit configured to limit an amplitude of the mass to a predetermined range.

16. The dynamic vibration absorber according to any

**EP 2 011 912 A1**

one of the preceding claims 1, wherein the washing machine comprises at least one leg configured to support the washing machine on a floor surface, and wherein the dynamic vibration absorber is coupled to the at least one leg.

**17.** The dynamic vibration absorber according to any one of the preceding claims, wherein the washing machine further comprises a pedestal, and wherein the dynamic vibration absorber is coupled to the pedestal.

**18.** A washing machine to which the dynamic vibration absorber according to any one of the preceding claims is coupled.

**19.** A dynamic vibration absorber for a washing machine, the dynamic vibration absorber comprising:

a housing;
a mass provided within the housing; and
at least one elastic body which supports the mass such that the mass is configured to vibrate within the housing,

wherein the dynamic vibration absorber is configured to be connected to the washing machine such that the vibration of the washing machine is reduced during operation.

**20.** The dynamic vibration absorber for the washing machine of claim 19, further comprising an amplitude limitation unit configured to limit an amplitude of the mass to a predetermined range.

**21.** A washing machine to which the dynamic vibration absorber according to claim 19 or 20 is coupled.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

930
910
950
920
940
932

FIG. 14

**EUROPEAN SEARCH REPORT**

Europäisches
Patentamt
European
Patent Office
Office européen
des brevets

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| X | JP 63 053332 A (AGENCY IND SCIENCE TECHN) 7 March 1988 (1988-03-07) * abstract * ----- | 1-7,14, 19 | INV. D06F37/20 D06F37/22 F16F7/104 |
| X | DE 25 24 592 A1 (GRONBACH WILHELM) 23 December 1976 (1976-12-23) * the whole document * ----- | 1-3,7, 14,18, 19,21 | |
| X | EP 1 529 868 A (MATSUSHITA ELECTRIC IND CO LTD [JP]) 11 May 2005 (2005-05-11) * the whole document * ----- | 1-3,7, 14,18, 19,21 | |
| | | | TECHNICAL FIELDS SEARCHED (IPC) D06F F16F |

The present search report has been drawn up for all claims

| Place of search | Date of completion of the search | Examiner |
|---|---|---|
| Munich | 26 November 2008 | Diaz y Diaz-Caneja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 00 4969

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | | Publication date | Patent family member(s) | | Publication date |
|---|---|---|---|---|---|
| JP 63053332 | A | 07-03-1988 | JP | 1868947 C | 06-09-1994 |
| | | | JP | 6003241 B | 12-01-1994 |
| DE 2524592 | A1 | 23-12-1976 | NONE | | |
| EP 1529868 | A | 11-05-2005 | CN | 1614122 A | 11-05-2005 |
| | | | CN | 2761664 Y | 01-03-2006 |
| | | | JP | 2005137643 A | 02-06-2005 |
| | | | KR | 20050044251 A | 12-05-2005 |
| | | | SG | 112088 A1 | 29-06-2005 |
| | | | TW | 252883 B | 11-04-2006 |

For more details about this annex : see Official Journal of the European Patent Office, No. 12/82